# EUROPÄISCHE PATENTSCHRIFT

(11) **EP 2 633 605 B1**
(45) Veröffentlichungstag und Bekanntmachung des Hinweises auf die Patenterteilung: **12.04.2023**
(21) Anmeldenummer: 11766886.3
(22) Anmeldetag: 19.09.2011
(51) Int. Cl.: H02K 7/102

(54) **BREMSE**
BRAKE
FREIN

(30) Priorität: 29.10.2010 DE 102010049744
(43) Veröffentlichungstag der Anmeldung: 04.09.2013
(73) Patentinhaber: SEW-EURODRIVE GmbH & Co. KG, 76646 Bruchsal (DE)
(72) Erfinder: LUTZ, Andreas, 76287 Rheinstetten (DE); FLÖRCHINGER, Gerhard, 67376 Harthausen (DE)
(74) Vertreter: Tüngler, Eberhard
(86) Internationale Anmeldenummer: PCT/EP2011/004677
(87) Internationale Veröffentlichungsnummer: WO 2012/055461

(56) Entgegenhaltungen:
- EP-A1- 0 735 649
- EP-A1- 1 496 601
- WO-A1-2005/107042
- CN-U- 201 593 544
- DE-A1- 2 529 131
- DE-U1- 29 923 849
- GB-A- 779 349
- US-A1- 2005 109 584

## Beschreibung

Die Erfindung betrifft eine Bremse.

Es ist allgemein bekannt, Motoren mit einer Bremse zu verbinden.

**Aus der** EP 1 496 601 A1 **ist ein Motor mit einer elektromagnetisch betätigbaren Doppelbremse bekannt.**

**Aus der** EP 0 735 649 A1 **ist eine elektrische Maschine mit Bremssystem bekannt.**

**Aus der** DE 299 23 849 U1 **ist eine Vorrichtung zum Abbremsen von Elektromotoren bekannt.**

**Aus der** WO 2005/107042 A1 **ist eine Baureihe von Elektromotoren bekannt.**

**Aus der** US 2005/010984 A1 **ist als nächstliegender Stand der Technik ein motorisierter Rollenantrieb bekannt.**

Der motorisierte Rollenantrieb aus US 2005/010984 A1 ist mit einer Bremse nach dem Oberbegriff des Anspruchs 1 versehen.

**Aus der** CN 201 593 544 U **ist ein Schraubteil mit Innengewinde und Innensechskant bekannt.**

**Aus der** DE 25 29 131 A1 **ist ein Arbeitszylinder für pneumatische und hydraulische Druckmedien bekannt.**

**Aus der** GB 779 349 A **ist eine Bremsanordnung bekannt.**

Der Erfindung liegt daher die Aufgabe zugrunde, eine Bremse für einen Elektromotor weiterzubilden, insbesondere unter Erhöhung der Sicherheit.

Erfindungsgemäß wird die Aufgabe bei der Bremse nach den in Anspruch 1 angegebenen Merkmalen gelöst.

Wichtige Merkmale bei der Bremse, nämlich vorkomplettiert ausgebildete Bremse, für einen Elektromotor, in dessen Gehäuse die Bremse anordenbar ist, sind, dass
die Bremse elektromagnetisch betätigbar ist und
   - eine Spulenwicklung aufweist, die in einem Spulenkern vorgesehen ist,
   - einen Belagträger aufweist, der mittels einer auf einer Rotorwelle des Elektromotors vorsehbaren Mitnehmerverzahnung in Umfangsrichtung formschlüssig und linear, nämlich in Rotorachsrichtung, bewegbar anordenbar ist,
nämlich auf einer Rotorwelle des Elektromotors,
   - eine von zumindest einem Führungsteil in Achsrichtung geführte Ankerscheibe, insbesondere eine von Federelementen beaufschlagbare Ankerscheibe, und
   - eine Reibscheibe,
umfasst,
wobei das Führungsteil mit dem Spulenkern und mit der Reibscheibe lösbar verbunden ist,
nämlich schraubverbunden ist, und die Reibscheibe mittels des Führungsteils beabstandet ist, also auf einen vorgebbaren festen Abstand zum Spulenkern festgelegt ist.

Von Vorteil ist dabei, dass die Bremse vorkomplettiert ausgebildet ist und somit als Komponente funktionsüberprüfbar ist. Außerdem ist sie zwar nicht dauerhaft betreibbar, da die Reibscheibe bei der maximalen Bremsleistung die entstehende Wärme nicht in ausreichendem Maße an die Umgebung abzuführen vermag, aber die Bremse ist als Einheit einfach bevorratbar und somit die Herstellung einfach ausführbar. Außerdem ist das Führungsteil zum Führen der Ankerscheibe als dasjenige Teil verwendbar, dass die vorkomplettierte Bremse zusammenhält. Es ist also kein weiteres zusätzliches Teil notwendig. Wesentlich bei dem Führungsteil, dass es an seinem einen axialen Ende einen Verbindungsbereich, beispielsweise Außengewinde, zum Verbinden mit dem Spulenkörper und an seinem anderen axialen Endbereich einen Verbindungsbereich, nämlich eine

Innengewinde, zum Verbinden mit der Reibscheibe aufweist.

Durch die Vorkomplettierung ist also nicht nur eine einfache Montierbarkeit erreichbar, sondern auch die Sicherheit erhöhbar.

Bei einer vorteilhaften Ausgestaltung ist die Ankerscheibe in Umfangsrichtung formschlüssig begrenzt und/oder gehalten vom Führungsteil. Von Vorteil ist dabei, dass das Führungsteil nicht nur die Beabstandung und den Zusammenhalt von Reibscheibe und Spulenkörper bewirkt, sondern auch in dem so geschaffenen Zwischenraumbereich zwischen Reibscheibe und Spulenkern die Ankerscheibe vorsehbar ist, wobei sie zwar linear bewegbar angeordnet ist, aber in Umfangsrichtung nicht drehbar, weil formschlüssig, gehalten ist.

Bei einer vorteilhaften Ausgestaltung weist das Führungsteil einen ersten axialen Abschnitt auf zur axialen Führung der Ankerscheibe, insbesondere also ist in diesem ersten axialen Abschnitt ein zylindrischer Oberflächenabschnitt vorgesehen, und weist einen zweiten axialen Abschnitt auf, der ein Außengewinde zum Einschrauben in eine Gewindebohrung des Spulenkerns aufweist. Von Vorteil ist dabei, dass die Verbindungsbereiche in einfacher Weise herstellbar sind.

**Erfindungsgemäß** ist an einem axialen Endbereich des Führungsteils ein Innensechskant vorgesehen so, dass das Führungsteil mittels eines Sechskant-Werkzeugs in eine Gewindebohrung des Spulenkerns einschraubbar ist. Von Vorteil ist dabei, dass ein Einschrauben in den Spulenkern einfach ausführbar ist.

Bei einer vorteilhaften Ausgestaltung ist die Reibscheibe mittels einer Schraubverbindung, mit einer Schraube, gegen eine Stufe des Führungsteils angestellt, wobei mittels der Schraubverbindung die Reibscheibe und das Führungsteil schraubverbunden sind. Von Vorteil ist dabei, dass axial vertieft unter dem Innensechskantbereich ein Innengewindebereich vorsehbar ist.

**Erfindungsgemäß** ist das Führungsteil in den Spulenkörper einschraubbar bis zu einem Anliegen eines weiteren an dem Führungsteil ausgebildeten Absatzes. Von Vorteil ist dabei, dass der Abstand in einfacher Weise vorgebbar ist.

**Erfindungsgemäß** weist das Führungsteil eine Ausnehmung mit Innengewinde auf, so dass die Reibscheibe der Bremse mittels einer Schraube an das Führungsteil schraubverbindbar ist, insbesondere gegen einen Absatz am Außenumfang des Führungsteils festlegbar ist. Von Vorteil ist dabei, dass einfache Verbindungsmittel verwendbar sind.

Erfindungsgemäß ist der Spulenkern der Bremse zur Aufnahme eines Lagers einer Rotorwelle ausgebildet, wobei die vom Lager und von der Spulenwicklung der Bremse überdeckten axialen Bereiche sich überschneiden oder gleichen. Von Vorteil ist dabei, dass der Spulenkern nicht nur Magnetfelder durchleitet, sondern sogar die vom Lager stammenden Kräfte, wie bei einer Drehmomentstütze, ableitet. Hierzu ist das Material entsprechend fest ausgelegt und trotzdem ferromagnetisch gewählt. **Erfindungsgemäß** ist die Bremse in einem Gehäuseteil, insbesondere Lagerschild, aufnehmbar, insbesondere in einer im Wesentlichen topfförmigen Vertiefung dieses Gehäuseteils aufnehmbar und schraubverbindbar ist. Von Vorteil ist dabei, dass die Bremse schützbar ist in einfacher und robuster Weise.

Bei einer vorteilhaften Ausgestaltung ist die Bremse als elektromagnetisch betätigbare Federdruckbremse ausgeführt, insbesondere wobei am Spulenkörper des Elektromagneten Federelemente abgestützt sind, die bei Nichtbestromung des Elektromagneten eine Ankerscheibe auf einen Belagträger drücken, der somit auf eine Reibscheibe gedrückt wird, wobei die Ankerscheibe drehfest zur Reibscheibe und zum Elektromagneten angeordnet ist und axial verschiebbar angeordnet ist, wobei der Belagträger mit der Rotorwelle des Elektromotors drehfest und axial verschiebbar verbunden ist. Von Vorteil ist dabei, dass bei Stromausfall die Bremse einfällt und somit die Sicherheit erhöht ist.

Bei einer vorteilhaften Ausgestaltung ist die Bremse in einem axial verlängert ausgeführten Lagerschild aufnehmbar, an dem eine zweite Bremse angebaut ist, insbesondere wobei das Lagerschild als Bremsfläche für einen Belagträger der zweiten Bremse fungiert, wobei der Belagträger von einer mittels Federelementen axial verschiebbaren Ankerscheibe beaufschlagt wird. Von Vorteil ist dabei, dass zwei Bremsen vorsehbar sind und somit die Sicherheit erhöht ist.

Bei einer vorteilhaften Ausgestaltung sind erste und zweite Bremse vorkomplettiert ausgebildet, insbesondere also vor dem Zusammenbauen des gesamten Motors mit Bremsen funktionsüberprüfbar sind. Von Vorteil ist dabei, dass die Sicherheit erhöhbar ist und außerdem die Fertigung vereinfacht, da die Fertigungsschritte in Teilpaketen ausführbar sind, nämlich das Anfertigen der Bremse und separat davon das Zusammenfügen des Motors.

Bei einer vorteilhaften Ausgestaltung sind in Umfangsrichtung mehrere Führungsteile angeordnet, insbesondere mehrere gleichartige Führungsteile. Von Vorteil ist dabei, dass Die Stabilität und Sicherheit weiter erhöhbar ist.

Der beschriebene Elektromotor ist mit einer ersten und einer zweiten Bremse ausführbar,
wobei die erste Bremse im Gehäuse des Motors angeordnet ist,
wobei das Gehäuse die Statorwicklungen des Motors gehäusebildend umgibt und aus Gehäuseteilen zusammengesetzt ist, insbesondere mittels jeweiliger abgedichteter Schraubverbindungen zwischen den Gehäuseteilen,
wobei die zweite Bremse am Motor angebaut ist, insbesondere also am Gehäuse des Motors angebaut ist.

Von Vorteil ist dabei, dass zwei Bremsen Drehmoment, also Bremsmoment, an die Rotorwelle führen können. Somit ist die Sicherheit erhöhbar. Insbesondere sind die Bremsen nach verschiedenen Wirkprinzipien ausführbar, beispielsweise als den Piezoeffekt nutzende Bremse oder als elektromagnetisch betätigbare Federdruckbremse. Auf diese Weise ist durch die unterschiedlichen Wirkprinzipien eine noch weiter erhöhte Sicherheit erreichbar. Auch bei Ausführung als elektromagnetisch betätigbare Federdruckbremse sind unterschiedliche Wirkweisen realisierbar, wie Gleichstrombremse oder Wechselstrombremse.

Bei einer vorteilhaften Weiterbildung ist die erste Bremse in einem Gehäuseteil, insbesondere Lagerschild, aufgenommen, insbesondere in einer im Wesentlichen topfförmigen Vertiefung aufgenommen ist und schraubverbunden ist. Von Vorteil ist dabei, dass die erste Bremse vorkomplettiert ausbildbar ist und in einem für die Bremse gehäusebildenden und somit die Wärme der Bremse abführenden Gehäuseteil aufnehmbar ist. Außerdem hat das Gehäuseteil dann auch Magnetfeld-abschirmende Funktion.

Bei einer vorteilhaften Weiterbildung ist die erste Bremse in einem Gehäuseteil, insbesondere Lagerschild, aufgenommen, welches als Spulenkern der Spulenwicklung des Elektromagneten der Bremse fungiert. Von Vorteil ist dabei, dass das Gehäuseteil mehrere Funktionen ausführt und somit die Anzahl der notwendigen Teile für das Herstellen des Motors mit Bremsen gering ist.

Bei einer vorteilhaften Weiterbildung nimmt das Gehäuseteil ein Lager der Rotorwelle des Motors auf. Von Vorteil ist dabei, dass Kräfte vom Lager ans Gehäuseteil ableitbar sind und ebenso die Wärme des Lagers über das Gehäuseteil an die Umgebung ableitbar ist. Außerdem ist die Wärme der Bremsspule ableitbar an die Umgebung und das Magnetfeld geführt im Spulenkern. Insbesondere sitzen Lager und Spulenwicklung der Bremse im gleichen axialen Bereich oder die entsprechend überdeckten axialen Bereiche überschneiden sich.

Bei einer vorteilhaften Weiterbildung ist in einer im Wesentlichen topfförmigen Vertiefung aufgenommen und schraubverbunden. Von Vorteil ist dabei, dass das Gehäuseteil eine einfach herzustellende Formgebung aufweist.

Bei einer vorteilhaften Weiterbildung ist beziehungsweise sind eine der Bremsen oder beide Bremsen als elektromagnetisch betätigbare Federdruckbremse ausgeführt, insbesondere wobei am Spulenkörper des Elektromagneten Federelemente abgestützt sind, die bei Nichtbestromung des Elektromagneten eine Ankerscheibe auf einen Belagträger drücken, der somit auf eine Reibscheibe gedrückt wird, wobei die Ankerscheibe drehfest zur Reibscheibe und zum Elektromagneten angeordnet ist und axial verschiebbar angeordnet ist, wobei der Belagträger mit der Rotorwelle des Elektromotors drehfest und axial verschiebbar verbunden ist. Von Vorteil ist dabei, dass bei Nichtbestromung die Bremse einfällt und somit bei Stromausfall Bremskraft erzeugt wird, wodurch die Sicherheit erhöht ist.

Bei einer vorteilhaften Weiterbildung ist eine Bremse, insbesondere die erste Bremse, vorkomplettiert ausgebildet, insbesondere indem eine Reibscheibe mittels eines Führungsteils axial beabstandet zu einem Spulenkern der Bremse und festgelegt ist,

insbesondere wobei das Weiterbildung zur axialen Führung einer Ankerscheibe der Bremse vorgesehen ist, wobei die Ankerscheibe in Umfangsrichtung formschlüssig begrenzt und/oder gehalten ist vom Führungsteil. Von Vorteil ist dabei, dass die vorkomplettierte Bremse in ihrer Funktion schon vor dem Zusammenfügen des Motors überprüfbar ist als Einheit. Außerdem ist sie als lagerfähige Einheit ausgeführt und somit für logistische Zwecke einfach benutzbar.

Bei einer vorteilhaften Weiterbildung weist das Führungsteil einen ersten axialen Abschnitt aufweist zur Führung der Ankerscheibe und einen zweiten axialen Abschnitt auf, der ein Außengewinde zum Einschrauben in eine Gewindebohrung des Spulenkerns aufweist. Von Vorteil ist dabei, dass mittels des Führungsteils eine vorkomplettierte Ausführung ermöglicht ist und das Führungsteil zum Zusammenhalten der Teile der Bremse verwendbar ist.

Bei einer vorteilhaften Weiterbildung ist an einem axialen Endbereich des Führungsteils ein Innensechskant vorgesehen, insbesondere so, dass das Führungsteil mittels eines Sechskant-Werkzeugs in eine Gewindebohrung des Spulenkerns einschraubbar ist. Von Vorteil ist dabei, dass eine einfache Herstellung ermöglicht ist.

Bei einer vorteilhaften Weiterbildung nimmt der Spulenkern der ersten Bremse ein Lager der Rotorwelle auf. Von Vorteil ist dabei, dass mehrere Funktionen realisiert sind mit einem einzigen Gehäuseteil.

Bei einer vorteilhaften Weiterbildung weist das Führungsteil eine Ausnehmung mit Innengewinde auf, so dass eine Reibscheibe der Bremse mittels einer Schraube an das Führungsteil schraubverbindbar ist, insbesondere gegen einen Absatz am Außenumfang des Führungsteils festlegbar ist. Von Vorteil ist dabei, dass ein Zusammenhalten der Reibscheibe und des Spulenkerns ermöglicht ist, wobei ein Abstand einhaltbar ist, so dass im Zwischenraum ein Belagträger und eine Ankerscheibe axial beweglich aber radial begrenzt gehalten sind.

Bei einer vorteilhaften Weiterbildung ist die erste Bremse in einem axial verlängert ausgeführten Lagerschild aufgenommen, an dem die zweite Bremse angebaut ist, insbesondere wobei das Lagerschild als Bremsfläche für einen Belagträger der zweiten Bremse fungiert, wobei der Belagträger von einer mittels Federelementen axial verschiebbaren Ankerscheibe beaufschlagt wird. Von Vorteil ist dabei, dass eine besonders einfache Herstellung ausführbar ist und das Lagerschild auch einen Anteil der Bremswärme der Anbaubremse an die Umgebung abführt.

Bei einer vorteilhaften Weiterbildung ist zwischen einem Raumbereich, der die erste Bremse umfasst, und einem Raumbereich, der den Stator umfasst, eine Dichtscheibe angeordnet, insbesondere weist die zur Rotorwelle hin eine Abdichtung, wie Labyrinth-Dichtung, auf. Von Vorteil ist dabei, dass kein Abrieb der Reibbeläge des Belagträgers in den motorraumberiech gelangen kann.

Bei einer vorteilhaften Weiterbildung ist ein Anschlusskasten am axial verlängert ausgeführten Lagerschild befestigt. Von Vorteil ist dabei, dass auch eine Haltefunktion hierfür ausführbar ist vom Lagerschild, wobei auch elektrische Leitungen durch eine Ausnehmung im Lagerschild zum Raumberiech des Stators des Motors führbar sind.

Bei einer vorteilhaften Weiterbildung sind erste und zweite Bremse vorkomplettiert ausgebildet, insbesondere sind die Bremsen also vor dem Zusammenbauen des gesamten Motors mit Bremsen funktionsüberprüfbar. Von Vorteil ist dabei, dass **ein** einfaches Handhaben und Herstellen ermöglicht ist.

Weitere Vorteile ergeben sich aus den Unteransprüchen.

Die Erfindung wird nun anhand von Abbildungen näher erläutert:
In der Figur 1 ist ein erster erfindungsgemäßer Bremsmotor gezeigt, bei dem der Elektromotor als Asynchronmotor ausgeführt ist.
In der Figur 2 ist ein weiterer Bremsmotor im Querschnitt gezeigt, der kein Teil der Erfindung ist und bei dem der Elektromotor als Synchronmotor ausgeführt ist.
In der Figur 3 ist eine vorkomplettierte Bremse in Explosionsdarstellung gezeigt.

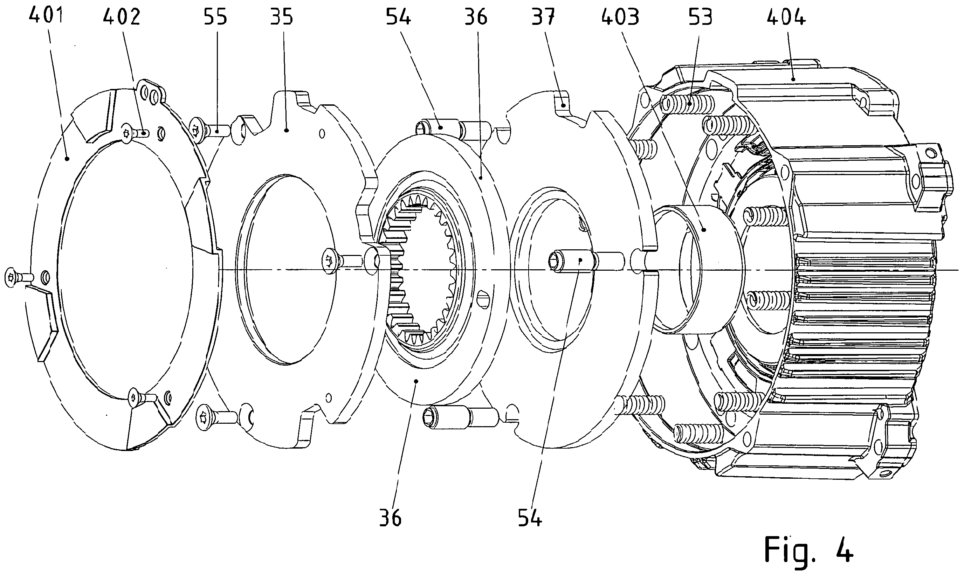

In der Figur 4 ist der Einbau der vorkomplettierten Bremse in ein Gehäuseteil 404 gezeigt, das gemäß Figur 6 an einen Elektromotor anbaubar ist.
In der Figur 5 ist die zu Figur 2 entsprechende Explosionsdarstellung eines Bremsmotors ausgeführt.
In der Figur 6 ist die zu Figur 1 entsprechende Explosionsdarstellung eines Bremsmotors ausgeführt.

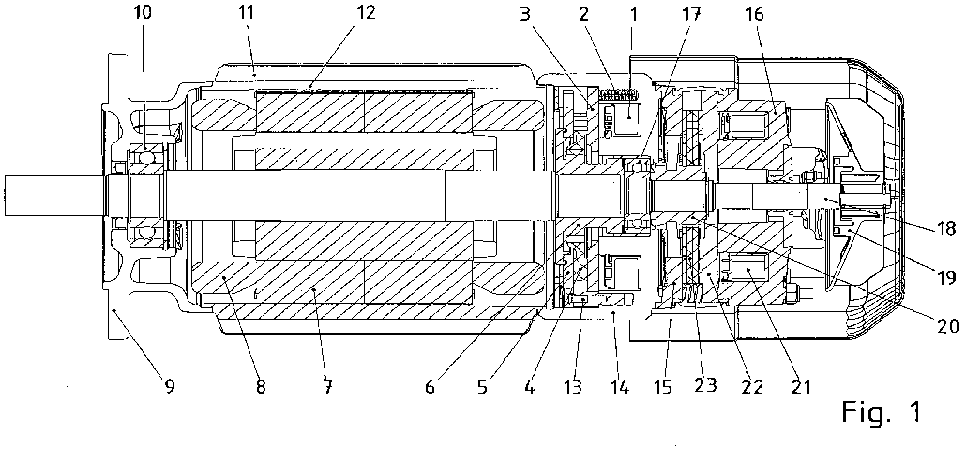

In der Figur 1 weist der Bremsmotor eine Rotorwelle 18 auf, die über ein Lager 10 im Lagerschild 9 gelagert ist. Dieses Lagerschild 9 ist schraubverbunden mit dem Gehäuseteil 12, welches Kühlrippen 11 aufweist. In diesem Gehäuseteil 12 ist das Statorblechpaket kraftschlüssig verbunden, insbesondere auch lösbar verbunden, eingeschrumpft und/oder mit Gussmasse vergossen.

Zugehörige Statorwicklungen sind in Ausnehmungen des Statorblechpakets vorgesehen, wobei in Figur 1 die Umlenkbereiche 8 der Statorwicklungen sichtbar sind.

Am vom Lagerschild 9 abgewandten axialen Endbereich des Gehäuseteils ist eine erste und axial nachfolgend eine zweite Bremse angeordnet, wobei die Bremsen elektromagnetisch betätigbar sind. Außerdem ist am axialen Endbereich des Motors ein Lüfter vorgesehen zur Kühlung der Bremsen und des Motors. Hierzu wird der Kühlluftstrom am Gehäuse des Bremsmotors in im Wesentlichen axialer Richtung entlang gelenkt.

Die erste dieser Bremsen weist ein als Spulenkern ausgebildetes Lagerschild 14 auf, das mit dem Gehäuseteil 12 schraubverbunden ist, wobei eine Dichtung in der Schraubverbindung zwischengeordnet ist. Das Material des Lagerschildes **14** ist magnetisierbar, insbesondere ferromagnetisch. In einer im Wesentlichen ringförmigen Vertiefung des Lagerschilds 14 ist die Bremsspulenwicklung 1 angeordnet.

Eine axial vor der Bremsspulenwicklung, axial verschiebbare und geführte, aber verdrehgesichert angeordnete Ankerscheibe 3 wird bei Bestromung der Bremsspulenwicklung 1 von dieser angezogen und entgegen der von Federelementen 2 erzeugten Federkraft axial auf die Bremsspulenwicklung 1 hinbewegt. Dabei stützen sich die Federelemente 2 auch gegen das Lagerschild 14 ab.

Auf der Rotorwelle 18 ist ein Mitnehmer 6, also ein außenverzahntes Verzahnteil, mittels Passfederverbindung in Umfangsrichtung formschlüssig, also drehfest, verbunden Dabei ist die Außenverzahnung in Achsrichtung der Rotorwelle ausgeführt, so dass ein mit einer Innenverzahnung versehener Belagträger 4 in Umfangsrichtung formschlüssig aber in axialer Richtung verschiebbar angeordnet ist. Der Belagträger 4 weist axial an beiden Seiten Reibbeläge auf.

Auf der von der Ankerscheibe abgewandten axialen Seite des Belagträgers 4 ist eine Reibscheibe 5 angeordnet, die mit einem Gehäuseteil des Motors schraubverbindbar ist und somit Reibwärme ableitet an dieses Gehäuseteil.

Zur Schraubverbindung ist eine **Schraube 13,** die **vorzugsweise** als Stiftschraube ausgeführt ist, verwendet. Diese Schraube 13 dient zusätzlich auch der Führung der Ankerscheibe 3.

Die integrierte Ausführung des Lagerschildes 14 als Spulenkern ermöglicht auch die direkte Wärmeabfuhr der Bremsspule 1 an die Umgebung. Außerdem ist die beschriebene elektromagnetisch betätigbare Federdruckbremse in radialer Richtung gehäusebildend umgeben vom Lagerschild 14.

Axial vor der Bremse ist der Elektromotor angeordnet, wobei er dicht verbunden ist, also abgedichtet durch eine Dichtung. Axial hinter der Bremse ist eine zweite Bremse angeordnet zusammen mit einem Lüfter und gegebenenfalls mit einem Winkelsensor oder Winkelgeschwindigkeitssensor.

Die erste Bremse ist wegen ihres kompakten, ins Lagerschild 14 als Gehäuseteil integrierten Aufbaus als Einbaubremse bezeichenbar. Hingegen ist die zweite Bremse nach Art einer Anbaubremse ausgeführt.

Die Funktionsweise der Anbaubremse ist wiederum gleichartig zur geschilderten Funktionsweise der Einbaubremse.

Dabei ist die Anbaubremse mittels der Reibscheibe 15 angeschraubt an das Lagerschild 14. Der Spulenkern 16 nimmt wiederum die Bremsspulenwicklung 21 auf, bei deren Bestromung die Ankerscheibe 22 axial gegen die von Federelementen erzeugte Federkraft bewegt wird. Auf dem mit der Rotorwelle 18 drehfest verbundenen Mitnehmer 20 ist wiederum drehfest aber axial verschiebbar ein Belagträger 23 mit beidseitig angeordneten Reibbelägen vorgesehen. Somit wird bei Einfallen der Bremse, also bei Nichtbestromung der Bremsspulenwicklung 21, der Belagträger 23 von der Ankerscheibe 22 auf die Reibscheibe 15 gedrückt.

Am axialen Ende ist ein Lüfter 19 angeordnet. Zum Schutz ist eine mit dem Lagerschild 14 schraubverbundene Lüfterhaube den Lüfter 19 umgebend vorgesehen.

Das Lager 17 ist im Lagerschild 14 aufgenommen. Somit nimmt dieses auch die entsprechenden Kräfte auf. Da auch die Wärme vom Lagerschild 14 aufgenommene Wärme direkt an die Umgebung abführbar ist, außerdem das Lager 17 aufgenommen ist zur Lagerung der Rotorwelle 18 und das Material des Lagerschilds 14 derart ausgewählt und geformt ist, dass die von der Wicklung erzeugten Magnetfelder geführt werden, sind im Lagerschild 14 mehrere technische Funktionen integriert.

Die ans Lagerschild 14 auf der vom Motor abgewandten Seite angebaute Anbaubremse weist ein eigenständiges Gehäuse auf, insbesondere das zusammen mit der Lüfterhaube gebildet ist. Dieses Gehäuse ist mit dem Lagerschild an einer wohldefinierten Schnittstelle schraubverbunden. Dabei ist eine Dichtung vorgesehen und ein Zentriermittel, wie Zentrierbund. Statt der Anbaubremse sind auch andere Anbauten, wie beispielsweise umfassend einen Winkelsensor oder dergleichen, ausführbar.

Auch zum Motor hin weist das Lagerschild 14 eine entsprechende Schnittstelle auf, so dass verschiedene Motoren, insbesondere wahlweise Synchronmotor, Asynchronmotor, LSPM-Motor, Reluktanzmotor oder dergleichen, verbindbar sind an der Schnittstelle.

Bei weiteren erfindungsgemäßen Ausführungsbeispielen sind die Funktionsweise und/oder Wirkprinzipien der beiden Bremsen verschieden ausgeführt. Beispielsweise ist eine erste Bremse mit Gleichstrom und die andere Bremse mit Wechselstrom betrieben.

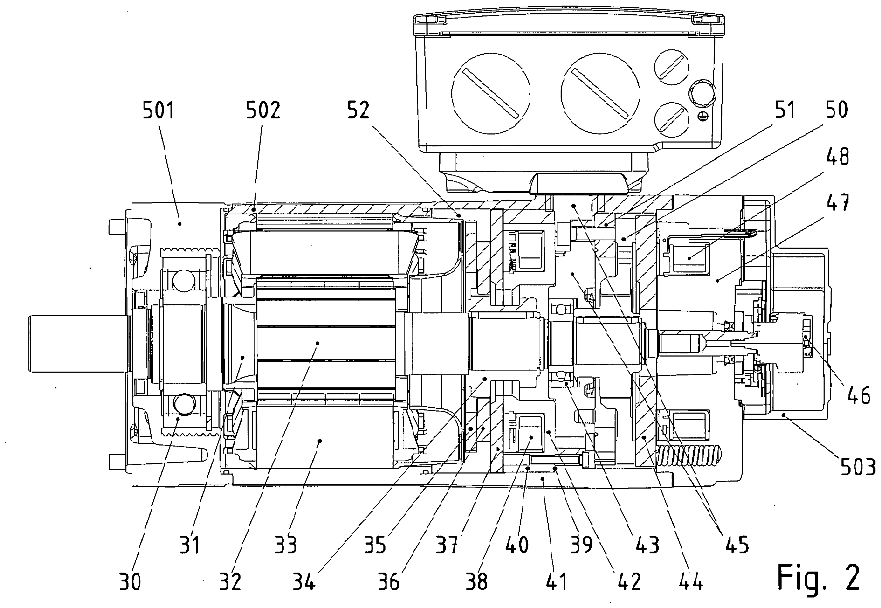

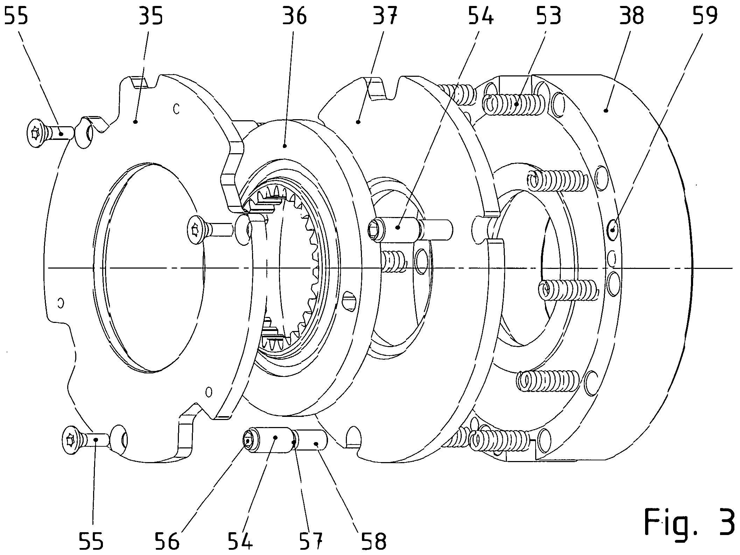

In der Figur 2 ist ein anderer Motor dargestellt, wobei hier die in Figur 3 dargestellte vorkomplettierte erste Bremse in ein Lagerschild 41 eingefügt wird, dass die zweite Bremse aufnimmt.

Dabei ist die vorkomplettierte Bremse wiederum aus einem Spulenkörper 38 mit Spulenwicklung zusammengesetzt, an dem sich Druckfedern 53 abstützen und eine Ankerscheibe 37 axial vom Spulenkörper 38 wegdrücken, wenn die Spulenwicklung unbestromt ist. Dabei wird die Ankerscheibe 37 von sich axial erstreckenden Führungsteilen 54 geführt und auf den Belagträger 36 gedrückt, welcher beidseitig Reibbeläge aufweist und auf die Reibscheibe 35 gedrückt wird.

Die Vorkomplettierung bewirkt, dass die in Figur 3 gezeigte Bremse als solche transportierbar ist und eine lagerfähige Einheit bildet, also zusammengehalten ist.

Hierzu weisen die Führungsteile 54 einen ersten axialen Bereich auf, der zur Führung dient, also an der Außenseite zylindrisch und glatt ausgeführt ist. In einem zweiten axialen Bereich ist ein Außengewinde 58 vorgesehen, mit dem das jeweilige Führungsteil 54 in den Spulenkörper 38 eingeschraubt ist, insbesondere in eine jeweilige Gewindebohrung 59 des Spulenkörpers 38.

An der vom axialen Außengewinde-Bereich abgewandten axialen Endbereich des Führungsteils 54 ist ein Innensechskant 56 angeordnet, wodurch das Führungsteil 54 mit einem Sechskant-Werkzeug in eine entsprechend zugeordnete Gewindebohrung 59 des Spulenkörpers 38 einschraubbar ist. Axial tiefer als der Innensechskant 56, also axial sich anschließend an den Bereich des Innensechskants 56 ist eine Innengewindebohrung vorgesehen, in die Schrauben 55 einschraubbar. Dabei wird die Reibscheibe 35 von den Schrauben 55 gegen einen Absatz des Führungsteils gedrückt und somit der Abstand zwischen Reibscheibe 35 und Spulenkern 38 festgelegt.

Auf diese Weise ist die Bremse als Einheit zusammengehalten trotz der axialen Beweglichkeit der Ankerscheibe 37. Außerdem ist der Belagträger 36 gegen ein Herausfallen aus der Bremse gesichert, indem in Umfangsrichtung drei oder mehr Führungsteile 54 vorgesehen sind, die auf einem Durchmesser angeordnet sind, der größer ist als der Außendurchmesser des Belagträgers 36.

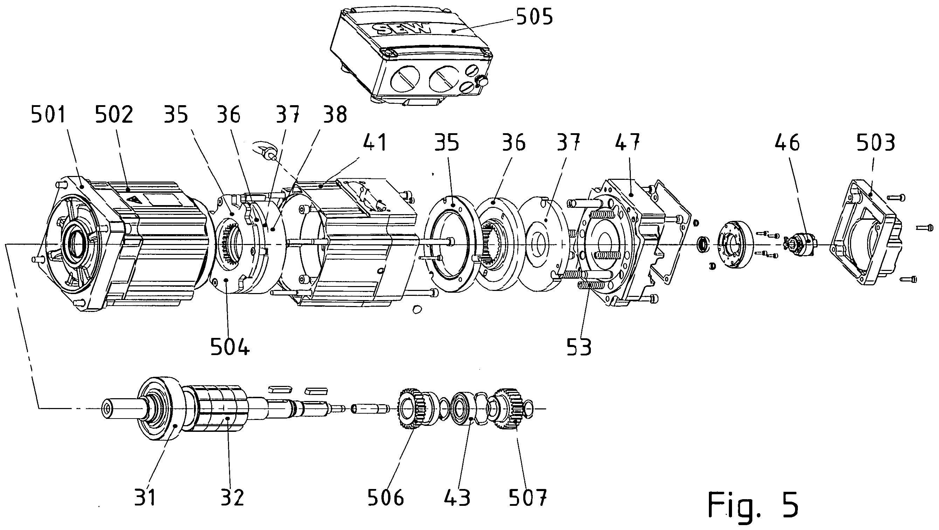

Wie in Figur 2 beziehungsweise in Figur 5 ersichtlich, ist der Anschlusskasten 505 auf das Lagerschild 41 aufschraubbar. Das verlängert ausgeführte Lagerschild 41 nimmt die vorkomplettierte Bremse (36, 37, 38, 504) auf und ist schraubverbunden mit dem Statorgehäuseteil 502 des Synchronmotors. A-seitig ist dieses Statorgehäuseteil abgeschlossen mittels eines Lagerschildes 501.

Die Rotorwelle 31 ist mit einem Mitnehmer 506 drehfest verbunden, der mit axial verlaufender Außenverzahnung für die Einbaubremse ausgeführt ist, und mit einem Mitnehmer 507, der mit axial verlaufender Außenverzahnung für die Anbaubremse ausgeführt ist.

Die vorkomplettierte Bremse nach Figur 3 wird schraubverbunden mit dem axial verlängert ausgeführten Lagerschild der zweiten Bremse, also in einer Vertiefung des grob gesprochen topfförmig ausgeführten Lagerschildes. Dabei wird die Schraubverbindung mit durchgehenden Verbindungsschrauben 40 ausgeführt.

Der Synchronmotor nach Figur 2 weist wiederum eine Rotorwelle 31 auf, die über ein erstes Lager 30 im Lagerschild 501 gelagert ist. Außerdem sind auf der Rotorwelle Dauermagnete 32 angeordnet, die mit dem auf dem Statorblechpaket 33 vorgesehenen Statorwicklungen wechselwirken.

Des Weiteren ist auf der Rotorwelle 31 wiederum ein Mitnehmer 34 angeordnet, so dass ein axial bewegbarer Reibbelagträger in Umfangsrichtung formschlüssig verbunden ist. Bei Nicht-Bestromung der Spulenwicklung 38 drückt die Ankerscheibe 37 den Belagträger gegen die Reibscheibe 35.

Somit entspricht diese Bremse nach Aufbau und Wirkungsweise der vorkomplettierten Bremse nach Figur 2 und ist nun in das Lagerschild (41, 45) als Einbaubremse eingebaut. Das Lagerschild (41, 45) nimmt aber auch das Lager 43 der Rotorwelle 31 auf.

Des Weiteren weist das Lagerschild (41, 45) einen Zentriersitz 39 auf, an dem die vorkomplettierte Einbaubremse verbindbar ist und somit ausgerichtet wird beim Verbinden.

An das Lagerschild (41, 45) ist eine Anbaubremse angebaut, die kein Lager der Rotorwelle 31 aufnimmt sondern auf der von der Einbaubremse abgewandten Seite 42 des Lagers 43 angeordnet ist.

Die Anbaubremse ist in gleichartiger Weise aufgebaut wie die Einbaubremse, so dass also ein Spulenkern 47 schraubverbunden ist mit dem Lagerschild (41, 45). Im Spulenkern 47 ist eine Spulenwicklung aufgenommen, deren Magnetfeld bei Bestromung der Spulenwicklung 48 die Ankerscheibe anzieht. Bei Nichtbestromung drücken Federelemente die Ankerscheibe wiederum auf einen Belagträger 50, welcher axial beweglich und in Umfangsrichtung formschlüssig mit einem Mitnehmer verbunden ist, der drehfest mit der Rotorwelle verbunden ist. Dabei drückt dann die Ankerscheibe 44 den Belagträger 50 gegen die Reibscheibe 51. Die Ankerscheibe 44 ist wiederum axial geführt die Reibscheibe 51 lösbar verbunden mit dem Spulenkern 47.

Am motorabgewandten Endbereich der Anbaubremse ist ein Winkelsensor 46 angeordnet.

Zwischen Motorbereich und Einbaubremse ist eine Dichtscheibe 52, insbesondere aus Kunststoff, angeordnet. Somit ist verhindert, dass Abrieb des Belagträgers in den Motorbereich gelangen.

Die Dichtscheibe 52 ist auch zur Rotorwelle 31 hin abgedichtet ausgeführt, insbesondere mit einer Labyrinthdichtung oder dergleichen. Somit ist der Motorbereich vom Bereich der Einbaubremse genügend abgedichtet, insbesondere um das Eindringen von Abrieb in den Motorbereich zumindest im Wesentlichen zu verhindern.

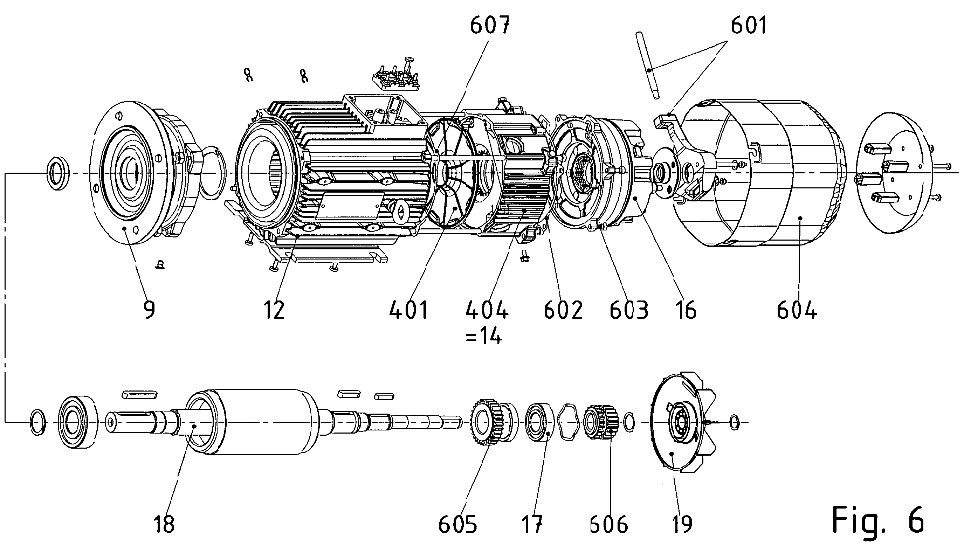

Bei dem Ausführungsbeispiel nach Figur 6 ist die an den Asynchronmotor angebaute Bremse gezeigt, die als Einbaubremse ausgeführt ist, also den Motor an seiner axialen Stirnseite gehäusebildend abschließt, und mit der Reibscheibe 401 zum Motor hin abgedichtet mit dem Dichtring 607 verbunden wird. Eine zweite Bremse ist als Anbaubremse ausgeführt und abgedichtet mit dem Lagerschild, also Gehäuseteil der Einbaubremse, verbunden mittels des Dichtrings 602. Die Anbaubremse ist mittels der Schrauben 603 an das Lageschild (404, 14) angeschraubt. Am Gehäuseteil 16 der Anbaubremse ist eine Lüfterhaube gehäusebildend vorgesehen, aus der nur der von Hand betätigbare Betätigungshebel der Handlüfteinheit 601 herausragt. Mittels Betätigens dieser Handlüfteinheit 601 ist die Bremse lüftbar, also im stromlosen Fall die Bremskraft abstellbar. Auf der Rotorwelle 18 ist ein Mitnehmer 605 mit axial verlaufender Außenverzahnung für die Einbaubremse und axial hiervon beabstandet durch das Lager 17 ein Mitnehmer 606 mit axial verlaufender Außenverzahnung für die Anbaubremse vorgesehen.

### Bezugszeichenliste

1 Bremsspulenwicklung
2 Federelemente
3 Ankerscheibe
4 Belagträger
5 Reibscheibe
6 Mitnehmer
7 Statorblechpaket
8 Umlenkbereich der Statorwicklungen
9 Lagerschild
10 Lager
11 Kühlrippen
12 Gehäuseteil
13 Schraube
14, 404 als Spulenkern ausgebildetes Lagerschild
15 Reibscheibe
16 Spulenkern
17 Lager
18 Rotorwelle
19 Lüfter
20 Mitnehmer
21 Bremsspulenwicklung
22 Ankerscheibe
23 Belagträger
30 Lager
31 Rotorwelle
32 Dauermagnete
33 Statorblechpaket
34 Mitnehmer
35 Reibscheibe
36 Belagträger
37 Ankerscheibe
38 Spulenkern mit Spulenwicklung
39 Zentriersitz
40 Verbindungsschraube
41 Lagerschild, axial verlängert ausgeführt
42 Spulenkern
43 Lager
44 Ankerscheibe
45 Lagerschild
46 Winkelsensor
47 Spulenkern
48 Spulenwicklung
50 Belagträger
51 Reibscheibe
52 Dichtscheibe, insbesondere Kunststoff-Dichtscheibe
53 Druckfedern
54 Führungsteil
55 Schraube zum Anschrauben der Reibscheibe gegen die Stufe des Führungsteils 54
56 Innensechskant
57 Absatz
58 Außengewinde
59 Gewindebohrung
401 Dichtscheibe
402 Schraube
403 Hülse
404 Lagerschild
501 Lagerschild
502 Gehäuseteil des Synchronmotors
503 Gehäuseteil
504 Reibscheibe
505 Anschlusskasten
506 Mitnehmer mit axial verlaufender Außenverzahnung für Einbaubremse
507 Mitnehmer mit axial verlaufender Außenverzahnung für Anbaubremse
601 Handlüfteinheit
602 Dichtring
603 Schraube
604 Lüfterhaube
605 Mitnehmer mit axial verlaufender Außenverzahnung für Einbaubremse
606 Mitnehmer mit axial verlaufender Außenverzahnung für Anbaubremse
607 Dichtring

## Patentansprüche

1. Bremse, **nämlich** vorkomplettiert ausgebildete Bremse, für einen Elektromotor, in dessen Gehäuse die Bremse anordenbar ist,
wobei die Bremse elektromagnetisch betätigbar ist und
- eine Spulenwicklung aufweist, die in einem Spulenkern (14) vorgesehen ist,
- einen Belagträger (4) aufweist, der mittels einer auf einer Rotorwelle (18) des Elektromotors vorsehbaren Mitnehmerverzahnung in Umfangsrichtung formschlüssig und linear, nämlich in Rotorachsrichtung, bewegbar anordenbar ist, nämlich auf einer Rotorwelle (18) des Elektromotors,
- eine von zumindest einem Führungsteil (54) in Achsrichtung geführte Ankerscheibe (3), insbesondere eine von Federelementen (2) beaufschlagbare Ankerscheibe (3), und
- eine Reibscheibe (5),
umfasst,
wobei das Führungsteil (54) mit dem Spulenkern (14) und mit der Reibscheibe (5) lösbar verbunden ist, nämlich schraubverbunden ist, und die Reibscheibe (5) mittels des Führungsteils (54) **vom Spulenkern** (14) beabstandet ist, also auf einen vorgebbaren festen Abstand zum Spulenkern festgelegt ist,
**wobei das Führungsteil (54) in den Spulenkern** (14) **eingeschraubt ist bis zu einem Anliegen eines weiteren an dem Führungsteil (54) ausgebildeten Absatzes,**
wobei der Spulenkern (14) der Bremse ein Lager (17) der Rotorwelle (18) aufnimmt, **dadurch gekennzeichnet, dass**
die vom Lager (17) und von der Spulenwicklung (1) der Bremse überdeckten **axialen Bereiche sich überschneiden oder gleichen,**
**wobei an einem axialen Endbereich des Führungsteils (54) ein Innensechskant (56) vorgesehen ist so, dass das Führungsteil (54) mittels eines Sechskant-Werkzeugs in eine Gewindebohrung des Spulenkerns einschraubbar ist,**
**wobei das Führungsteil (54) eine Ausnehmung mit Innengewinde aufweist, so dass die Reibscheibe** (5) **der Bremse mittels einer Schraube an das Führungsteil (54) schraubverbunden ist,**
**wobei die Reibscheibe (5) gegen einen Absatz am Außenumfang des Führungsteils (54) festgelegt ist.**

2. Bremse nach Anspruch 1,
**dadurch gekennzeichnet, dass**
das Führungsteil (54) an seinem ersten axialen Endbereich einen Verbindungsbereich, insbesondere Außengewindebereich, zum Verbinden mit dem Spulenkern und an seinem anderen axialen Endbereich einen weiteren Verbindungsbereich, nämlich die Innengewinde, zum Verbinden mit der Reibscheibe (5) aufweist, insbesondere wobei erster und weiterer Verbindungsbereich voneinander beabstandet sind.

3. Bremse nach mindestens einem der vorangegangenen Ansprüche,
**dadurch gekennzeichnet, dass**
die Ankerscheibe (3) in Umfangsrichtung formschlüssig begrenzt und/oder gehalten ist vom Führungsteil (54).

4. Bremse nach mindestens einem der vorangegangenen Ansprüche,
**dadurch gekennzeichnet, dass**
das Führungsteil (54) einen ersten axialen Abschnitt aufweist zur axialen Führung der Ankerscheibe (3), insbesondere also in diesem ersten axialen Abschnitt ein zylindrischer Oberflächenabschnitt vorgesehen ist,
und einen zweiten axialen Abschnitt aufweist, der ein Außengewinde zum Einschrauben in eine Gewindebohrung des Spulenkerns aufweist.

5. Bremse nach mindestens einem der vorangegangenen Ansprüche,
**dadurch gekennzeichnet, dass**
die Reibscheibe (5) mittels einer Schraubverbindung, nämlich mit der Schraube, gegen eine Stufe des Führungsteils (54) angestellt ist, wobei mittels der Schraubverbindung die Reibscheibe (5) und das Führungsteil (54) schraubverbunden sind.

6. Bremse nach mindestens einem der vorangegangenen Ansprüche,
**dadurch gekennzeichnet, dass**
**die Bremse in einem Gehäuseteil**, **also Lagerschild aufgenommen ist in einer im Wesentlichen topfförmigen Vertiefung dieses Gehäuseteils aufgenommen und schraubverbunden ist.**

7. Bremse nach mindestens einem der vorangegangenen Ansprüche,
**dadurch gekennzeichnet, dass**
die Bremse als elektromagnetisch betätigbare Federdruckbremse ausgeführt ist,
insbesondere wobei am Spulenkern des Elektromagneten Federelemente (2) abgestützt sind, die bei Nichtbestromung des Elektromagneten eine Ankerscheibe (3) auf einen Belagträger (4) drücken, der somit auf eine Reibscheibe (5) gedrückt wird, wobei die Ankerscheibe (3) drehfest zur Reibscheibe (5) und zum Elektromagneten angeordnet ist und axial verschiebbar angeordnet ist, wobei der Belagträger (4) mit der Rotorwelle (18) des Elektromotors drehfest und axial verschiebbar verbunden ist.

8. Bremse nach mindestens einem der vorangegangenen Ansprüche,
**dadurch gekennzeichnet, dass**
die Bremse in einem axial verlängert ausgeführten Lagerschild aufnehmbar ist, an dem eine zweite Bremse angebaut ist, insbesondere wobei das Lagerschild als Bremsfläche für einen Belagträger (23) der zweiten Bremse fungiert, wobei der Belagträger (23) von einer mittels Federelementen axial verschiebbaren Ankerscheibe (22) beaufschlagt wird.

9. Bremse nach mindestens einem der vorangegangenen Ansprüche,
**dadurch gekennzeichnet, dass**
erste und zweite Bremse vorkomplettiert ausgebildet sind, insbesondere also vor dem Zusammenbauen des gesamten Motors mit Bremsen funktionsüberprüfbar sind.

10. Bremse nach mindestens einem der vorangegangenen Ansprüche,
**dadurch gekennzeichnet, dass**
in Umfangsrichtung mehrere Führungsteile angeordnet sind, insbesondere mehrere gleichartige Führungsteile.

## Claims

1. A brake, namely a pre-assembled brake, for an electric motor in whose housing there can be arranged the brake,
wherein the brake can be actuated electromagnetically and
- has a coil winding which is provided in a coil core (14),
- has a lining carrier (4) which can be movably arranged, by means of drive toothing providable on a rotor shaft (18) of the electric motor, in a form-locked manner in a circumferential direction and in a linear manner, namely in a rotor axial direction, namely on a rotor shaft (18) of the electric motor
comprises
- an armature plate (3), guided in an axial direction by at least one guide part (54), in particular an armature plate (3) actable upon by spring elements (2), and
- a friction disc (5),
wherein the guide part (54) is detachably connected to the coil core (14) and to the friction disc (5), namely is screw-connected, and the friction disc (5) is spaced apart from the coil core (14) by means of the guide part (54), therefore is secured at a predeterminable, fixed distance from the coil core,
wherein the guide part (54) is screwed into the coil core (14) until contact of a further shoulder formed at the guide part (54),
wherein the coil core (14) of the brake receives a bearing (17) of the rotor shaft (18),
**characterised in that**
the axial regions covered by the bearing (17) and by the coil winding (1) of the brake overlap or are the same,
wherein a hexagon socket (56) is provided at an axial end-region of the guide part (54) so that the guide part (54) can be screwed into a tapped bore of the coil core by means of a hexagonal tool,
wherein the guide part (54) has a cutout with an internal thread, so that the friction disc (5) of the brake is screw-connected to the guide part (54) by means of a screw,
wherein the friction disc (5) is secured against a shoulder at the outer circumference of the guide part (54).

2. A brake according to claim 1,
**characterised in that**
the guide part (54) has, at its first axial end-region, a connection region, in particular externally threaded region, for connection to the coil core and has, at its other axial end-region, a further connection region, namely the internal thread, for connection to the friction disc (5), in particular wherein first and further connection region are spaced apart from one another.

3. A brake according to at least one of the preceding claims,
**characterised in that**
the armature disc (3) is restricted and/or held in a circumferential direction in a form-locked manner by the guide part (54).

4. A brake according to at least one of the preceding claims,
**characterised in that**
the guide part (54) has a first axial portion to axially guide the armature plate (3),
in particular therefore in this first axial portion there is provided a cylindrical surface portion, and has a second axial portion which has an external thread for screwing into a tapped bore of the coil core.

5. A brake according to at least one of the preceding claims,
**characterised in that**
the friction disc (5) is placed against a step of the guide part (54) by means of a screw connection, namely with the screw, wherein the friction disc (5) and the guide part (54) are screw-connected by means of the screw connection.

6. A brake according to at least one of the preceding claims,
**characterised in that**
the brake is received in a housing part, therefore bearing plate, is received and screw-connected in a substantially pot-shaped depression of this housing part.

7. A brake according to at least one of the preceding claims,
**characterised in that**
the brake is in the form of an electromagnetically actuatable spring-loaded brake, in particular wherein spring elements (2) are supported on the coil core of the electromagnet, which spring elements press an armature plate (3) onto a lining carrier (4) when the electromagnet is not energised, which lining carrier is consequently pressed onto a friction disc (5), wherein the armature plate (3) is arranged in a rotationally-fixed manner with respect to the friction disc (5) and the electromagnet and is arranged in an axially displaceable manner, wherein the lining carrier (4) is connected to the rotor shaft (18) of the electric motor in a rotationally-fixed and axially displaceable manner.

8. A brake according to at least one of the preceding claims,
**characterised in that**
the brake can be received in an axially elongated bearing plate on which there is mounted a second brake, in particular wherein the bearing plate functions as braking surface for a lining carrier (23) of the second brake, wherein the lining carrier (23) is acted upon by an armature plate (22) axially displaceable by means of spring elements.

9. A brake according to at least one of the preceding claims,
**characterised in that**
first and second brake are pre-assembled, in particular therefore their functioning can be checked before the assembly of the entire motor with brakes.

10. A brake according to at least one of the preceding claims,
**characterised in that**
a plurality of guide parts is arranged in the circumferential direction, in particular a plurality of guide parts of the same type.

## Revendications

1. Frein, plus précisément frein de réalisation préassemblée destiné à un moteur électrique dans le carter duquel ledit frein peut être logé,
lequel frein peut être actionné électromagnétiquement et
- présente un bobinage prévu dans un noyau de bobine (14),
- présente un porte-garniture (4) pouvant être agencé par complémentarité de formes, au moyen d'une denture d'entraînement pouvant être prévue sur un arbre rotorique (18) du moteur électrique, avec mobilité linéaire dans la direction périphérique, plus précisément dans la direction de l'axe du rotor, plus précisément sur un arbre rotorique (18) dudit moteur électrique, et
- inclut un disque d'induit (3) guidé, dans la direction axiale, par au moins une pièce de guidage (54), en particulier un disque d'induit (3) pouvant être sollicité par des éléments élastiques (2), et
- un disque de frottement (5),
la pièce de guidage (54) étant reliée de manière libérable au noyau de bobine (14) et au disque de frottement (5), plus précisément reliée par vissage, et ledit disque de frottement (5) étant espacé dudit noyau de bobine (14) au moyen de ladite pièce de guidage (54), c'est-à-dire consigné à demeure, par rapport audit noyau de bobine, à une distance fixe pouvant être préétablie,
sachant que la pièce de guidage (54) est vissée dans le noyau de bobine (14) jusqu'à une venue en applique d'un décrochement supplémentaire, ménagé sur ladite pièce de guidage (54),
sachant que ledit noyau de bobine (14) du frein reçoit un palier (17) de l'arbre rotorique (18),
**caractérisé par le fait que**
les régions axiales, coiffées par le palier (17) et par le bobinage (1) du frein, se recoupent ou offrent une ressemblance,
sachant qu'un profil (56) à six pans creux est prévu au niveau d'une région extrême axiale de la pièce de guidage (54), de telle sorte que ladite pièce de guidage (54) puisse être vissée, au moyen d'un outil à six pas, dans un perçage taraudé du noyau de bobine,
ladite pièce de guidage (54) étant munie d'un évidement à filetage intérieur, de façon telle que le disque de frottement (5) du frein soit relié par vissage à ladite pièce de guidage (54), au moyen d'une vis,
ledit disque de frottement (5) étant consigné à demeure, contre un décrochement, sur le pourtour extérieur de ladite pièce de guidage (54).

2. Frein selon la revendication 1,
**caractérisé par le fait que**
la pièce de guidage (54) comporte, au niveau de sa première région extrême axiale, une zone de liaison et notamment une zone à filetage extérieur affectée à la liaison avec le noyau de bobine et, au niveau de son autre région extrême axiale, une zone supplémentaire de liaison, plus précisément les filetages intérieurs affectés à la liaison avec le disque de frottement (5),
sachant notamment que lesdites première et autre zones de liaison sont distantes l'une de l'autre.

3. Frein selon au moins l'une des revendications précédentes,
**caractérisé par le fait que**
le disque d'induit (3) est délimité par complémentarité de formes et/ou retenu par la pièce de guidage (54) dans la direction périphérique.

4. Frein selon au moins l'une des revendications précédentes,
**caractérisé par le fait que**
la pièce de guidage (54) comprend un premier tronçon axial dévolu au guidage axial du disque d'induit (3), c'est-à-dire qu'une zone de surface cylindrique est notamment prévue dans ce premier tronçon axial,
et un second tronçon axial muni d'un filetage extérieur, en vue du vissage dans un perçage taraudé du noyau de bobine.

5. Frein selon au moins l'une des revendications précédentes,
**caractérisé par le fait que**
le disque de frottement (5) est mis en place contre un gradin de la pièce de guidage (54) au moyen d'une liaison vissée, plus précisément à l'aide de la vis, ledit disque de frottement (5) et ladite pièce de guidage (54) étant solidarisés par vissage au moyen de ladite liaison vissée.

6. Frein selon au moins l'une des revendications précédentes,
**caractérisé par le fait que**
ledit frein est intégré dans une partie de carter, c'est-à-dire un bouclier de palier, en étant intégré et relié par vissage dans un renfoncement de cette partie de carter, substantiellement configuré à la manière d'une cuvette.

7. Frein selon au moins l'une des revendications précédentes,
**caractérisé par le fait que**
ledit frein est conçu comme un frein à pression de ressorts, pouvant être actionné électromagnétiquement,
sachant notamment que des éléments élastiques (2) prenant appui contre le noyau de bobine de l'électro-aimant pressent un disque d'induit (3), lorsque ledit électro-aimant est privé de courant, sur un porte-garniture (4) qui est en conséquence pressé sur un disque de frottement (5), ledit disque d'induit (3) étant agencé avec verrouillage rotatif par rapport audit disque de frottement (5) et audit électro-aimant, et agencé avec faculté de déplacement axial,
ledit porte-garniture (4) étant relié à l'arbre rotorique (18) du moteur électrique avec verrouillage rotatif et avec faculté de déplacement axial.

8. Frein selon au moins l'une des revendications précédentes,
**caractérisé par le fait que**
ledit frein peut être intégré dans un bouclier de palier de réalisation prolongée axialement, sur lequel un second frein est rapporté, ledit bouclier de palier remplissant notamment la fonction d'une surface de freinage dédiée à un porte-garniture (23) dudit second frein, lequel porte-garniture (23) est sollicité par un disque d'induit (22) pouvant se déplacer axialement au moyen d'éléments élastiques.

9. Frein selon au moins l'une des revendications précédentes,
**caractérisé par le fait que**
les premier et second freins sont de réalisations préassemblées, c'est-à-dire qu'ils peuvent être notamment soumis à un contrôle fonctionnel préalablement à l'assemblage du moteur complet, pourvu de freins.

10. Frein selon au moins l'une des revendications précédentes,
**caractérisé par le fait que**
plusieurs pièces de guidage, en particulier plusieurs pièces de guidage de type identique, sont implantées dans la direction périphérique.
